Europäisches Patentamt

European Patent Office

Office européen des brevets

(19)

(11) Veröffentlichungsnummer: **0 243 382 B1**

# EUROPÄISCHE PATENTSCHRIFT

(12)

(45) Veröffentlichungstag der Patentschrift: **26.08.92**

(51) Int. Cl.⁵: **G05D 1/02**

(21) Anmeldenummer: **86905709.1**

(22) Anmeldetag: **14.10.86**

(86) Internationale Anmeldenummer:
**PCT/CH86/00143**

(87) Internationale Veröffentlichungsnummer:
**WO 87/02483 (23.04.87 87/09)**

(54) VERFAHREN UND ANORDNUNG ZUR AUTOMATISCHEN STEUERUNG EINES ARBEITSFAHRZEUGES.

(30) Priorität: **15.10.85 CH 4429/85**

(43) Veröffentlichungstag der Anmeldung:
**04.11.87 Patentblatt  87/45**

(45) Bekanntmachung des Hinweises auf die
Patenterteilung:
**26.08.92 Patentblatt  92/35**

(84) Benannte Vertragsstaaten:
**AT BE CH DE FR GB IT LI LU NL SE**

(56) Entgegenhaltungen:
EP-A- 0 142 594     DE-A- 3 107 674
FR-A- 2 020 864     FR-A- 2 255 651
FR-A- 2 526 181     FR-A- 2 548 401
FR-A- 2 554 612

See also references of WO8702483

(73) Patentinhaber: **Knepper, Hans-Reinhard**
**Pfalzgrafenstrasse 80**
**W-4200 Oberhausen 14(DE)**

(72) Erfinder: **Knepper, Hans-Reinhard**
**Pfalzgrafenstrasse 80**
**W-4200 Oberhausen 14(DE)**

(74) Vertreter: **Troesch, Hans Alfred, Dr. sc. techn.**
**et al**
**Troesch Scheidegger Werner AG Siewerdt-**
**strasse 95**
**CH-8050 Zürich(CH)**

EP 0 243 382 B1

Rank Xerox (UK) Business Services

## Beschreibung

Die vorliegende Erfindung betrifft Verfahren zur automatischen Steuerung eines Reinigungsfahrzeuges über ein abzuarbeitendes, mindestens teilweise durch aufragende Wände festgelegtes Bodenareal, bei dem das Fahrzeug entlang den Wänden mit vorgegebenem Abstand zuerst einmal umläuft, dabei ein links bzw. rechts vom Fahrzeug liegender Abstand zur Wand überwacht und, falls er vom vorgegebenen Abstand abweicht, korrigiert wird und, nach Beendigung des genannten Umlaufs, das Bodenareal automatisch weiterabgearbeitet wird, sowie ein automatisch gesteuertes Reinigungsfahrzeug hierzu.

Aus dem Gebiet der automatischen Steuerung von Fahrzeugen sind ausserordentlich viele Techniken bekannt. Es wird diesbezüglich auf die beigefügte, integralen Bestandteil dieser Unterlagen bildende Liste zum Stande der Technik hingewiesen.

Wenn man die diesbezügliche technische Entwicklung betrachtet, so sind Verfahren bzw. Anordnungen, die auf der Basis von ortsfesten Leitstrukturen zur Führung des Fahrzeuges arbeiten, lange bekannt. Derartige Leitstrukturen sind im einfachsten Falle Schienen: Das Fahrzeug ist mechanisch damit wirkverbunden und wird durch die Schienen geführt. Es ist auch bekannt, beispielsweise aus der DE-PS-24 45 001, der DE-PS-27 22 222, der DE-OS-31 34 749 oder der FR-A-2 020 864 verallgemeinerte "Schienen" als Leitstrukturen ortsfest vorzusehen, wobei das Fahrzeug optisch oder elektromagnetisch, wie über Induktion, damit wirkverbunden ist und durch diese Leitstrukturen geführt wird. Auch die DE-OS-31 13 086 beschreibt eine derartige Technik, wobei als ortsfeste Leitstrukturen Reflexionsflächen vorgesehen werden, opto-elektronisch die Momentanposition des Fahrzeuges bezüglich dieser Reflexionsflächen ausgemessen wird und mit Hilfe dieser als Leitstrukturen wirkenden Reflexionsflächen, die mit dem Fahrzeug optisch wirkverbunden sind, das Fahrzeug geführt wird.

Dabei werden für ein automatisch entlang vorgegebener Bahnen zu führendes Lagerfahrzeug, an Begrenzungsflächen und in vorgegebener Winkellage, die genannten Reflexionsflächen angebracht. Fahrdaten werden dem Fahrzeug drahtlos übermittelt.

Aehnlich beschreibt die DE-OS 27 04 852 eine Technik, bei welcher als Leitstrukturen elektromagnetische Sender verwendet werden, die, mit Vorsehen entsprechender Empfänger am Fahrzeug, mit letzterem elektromagnetisch wirkverbunden sind, wobei das Fahrzeug wiederum mittels dieser Sender geführt wird.

Alle diese auf Vorsehen ortsfester Leitstrukturen konzipierten Techniken weisen einen oder mehrere der folgenden Nachteile auf:

- Es ist ein ausserordentlich grosser Aufwand zu betreiben, ein Bodenareal mit Leitstrukturen, wie Schienen, zu versehen. Dadurch wird der flexiblen Anwendung derartiger Verfahren bzw. Anordnungen auf unvorbereitete Bodenareale eine wesentliche Einschränkung gesetzt.
- Werden Leitstrukturen nur in relativ grossen Intervallen ortsfest am Bodenareal gesetzt, womit das Fahrzeug nur in relativ grossen Zeitintervallen seine Position auf dem Bodenareal überprüfen kann, so sind entweder grosse Abweichungen einer vom Fahrzeug tatsächlich durchlaufenen Bahn von einer erwünschten Bahn zwischen den Kontroll-Zeitpunkten in Kauf zu nehmen, oder es sind am Fahrzeug aufwendige Vorkehrungen vorzusehen, um aufgrund der Registrierung von Antriebs- und/oder Lenkorgan-Bewegungen am Fahrzeug, zwischen diesen Kontrollzeitpunkten, eine "relative" Fahrzeugorientierung" vornehmen zu können, die aber wegen unvermeidbaren Schlupferscheinungen zwischen besagten Organen und dem Boden ungenau ist und deshalb immer wieder an den besagten Kontroll-Zeitpunkten überprüft werden muss.
- Es muss, beispielsweise beim Vorsehen von Sendern als ortsfeste Leitstrukturen, neben dem diesbezüglichen Installationsaufwand mit Verlegen elektrischer Speisungskabeln eine genaue Planung vorgenommen werden, um auf dem Bodenareal freie Sende/Empfangsstrecken auszunützen.

Im Bestreben, eine automatische Steuerung genannter Art weitestgehend unabhängig von der Strukturierung des Bodenareals zu machen und somit zu umgehen, dass ortsfeste Leitstrukturen installiert und geplant werden müssen, wurden, wie aus der DE-PS 2 364 002 bekannt, schnelle elektro-optische Bildverarbeitungs-Verfahren eingesetzt, mit deren Hilfe sich das Fahrzeug am "Bild" des Raumes orientiert, mit Hilfe momentan aufgenommener Bildinformation und abgespeicherter SOLL-Bildinformation.

Es ist nun ohne weiteres ersichtlich, dass das Konzept, ortsfeste Leitstrukturen auszunützen, eine genaue Fahrzeugführung erlaubt, so lange die Wirkverbindung Fahrzeug-Leitstruktur erstellt ist. Je länger mithin die genannte Wirkverbindung erstellt bleibt, oder erstellt bleiben kann, desto geringer wird der technische Aufwand am Fahrzeug selber, um fehlerbehaftet, wie durch die genannten Schlupferscheinungen, in Phasen, während welchen das Fahrzeug mit den Leitstrukturen nicht wirkverbunden ist, dieses wenigstens einigermassen genau auf vorgegebenen Bahnen zu führen.

Aus der EP-A-0 142 594 sind ein Verfahren und ein Fahrzeug eingangs genannter Gattung bekannt geworden.

Dabei fährt ein Roboterfahrzeug, wie ein Reinigungsfahrzeug, auf einem abzuarbeitenden Bodenareal, entlang den Wänden einmal um, wobei sein Abstand bezüglich der Wand überwacht und gegebenenfalls korrigiert wird. Dieser Umlauf lehrt das Fahrzeug die Begrenzung des Areals, eine zweidimensionale "Karte" des Areals wird abgespeichert. Diese Karte wird elektronisch in Reihen und Kolonnen unterteilt, dann, für die Abarbeitung, das Fahrzeug geradeaus durch eine Kolonne nach der anderen geführt. Es wird überprüft, ob sich das Fahrzeug tatsächlich in der jeweilig angesteuerten Kolonne bewegt.

Dieses Vorgehen ist, was die vorzusehende Speicherkapazität am Fahrzeug anbelangt, um überhaupt die Arealkontur abspeichern zu können, um dann die Arbeit aufzunehmen, ausserordentlich aufwendig; ebenso aufwendig ist, in der Arbeitsphase, die Ueberwachung, ob sich das Fahrzeug im jeweiligen Kartenfeld befindet und sich auch entsprechend der jeweils abgearbeiteten Kartenkolonne bewegt, werden doch Felder der Karte dann, wenn sie vom Fahrzeug als durchlaufen angenommen werden, für die Abarbeitung als erledigt gekennzeichnet.

Die vorliegende Erfindung setzt sich zum Ziel, ein Verfahren bzw. Fahrzeug zu schaffen, bei dem

- der relativ geringe Installationsaufwand am Fahrzeug, wie er von Techniken mit speziell verlegten "Schienen"-Strukturen bekannt ist, beizubehalten,
- der für solche "Schienen"-Strukturen zu treibende fahrzeugexterne Installationsaufwand wegfällt.

Dies wird durch ein Verfahren erreicht, das sich nach dem kennzeichnenden Teil von Anspruch 1 auszeichnet bzw. durch ein Reinigungsfahrzeug, das sich nach dem kennzeichnenden Teil von Anspruch 13 auszeichnet.

Hier wird somit von der Einsicht ausgegangen, dass eine gegebene Wirkverbindung zu vorgesehenen Begrenzungswänden wesentlich länger aufrechterhalten werden kann, um das Fahrzeug auf Bahnen über das Bodenareal genau zu führen, wenn eine Spiralbahn angesteuert wird. Bei Vorgabe eines Abstandes ist der eine Bewegungsfreiheitsgrad des Fahrzeuges grundsätzlich gebunden, die Abstand-SOLL-Wert-Verstellung ergibt aber wieder eine Freigabe dieses Freiheitsgrades.

Ein weiteres erfinderisches Vorgehen zur Lösung obgenannter Aufgabe ergibt sich dadurch, dass man mit dem Fahrzeug eine Spur, vorzugsweise eine Arbeitsspur, legt, und den Fahrzeugabstand von dieser Spur als Leitstruktur regelt.

Ein aus den genannten, erfindungsgemäss kombiniertes Verfahren besteht darin, dass man mindestens zeitweise mit dem Fahrzeug eine Spur, vorzugsweise eine Reinigungsspur, legt, und den Fahrzeugabstand von dieser Spur mindestens zeitweise regelt.

Damit wird z.B. vorerst der Fahrzeugabstand von der Wand geregelt, bis z.B. eine genügend lange Spur gelegt ist, danach wird diese Spur als Leitstruktur eingesetzt.

Um auf einfache Art und Weise Wandkonturen, wie Ecken, abstandsgeregelt folgen zu können, wird weiter vorgeschlagen, dass man den Abstand zu Leitstrukturen in Richtung mindestens zweier fahrzeugfester Achsen bestimmt und den Abstand in der einen Richtung als Abstand-IST-Wert für die Regelung, den Abstand in der anderen Richtung als Steuergrösse für Antriebs- und/oder Lenkorgane des Fahrzeuges einsetzt.

Fährt beispielsweise ein Fahrzeug entlang einer Wand abstandsgeregelt und weist die Leitstruktur eine rückspringende Ecke auf, so wird dieses Rückspringen durch plötzliche Abstandsvergrösserung in der einen Richtung registriert: Die Regelung allein reicht aus, um dieser rückspringenden Ecke zu folgen. Begegnet das Fahrzeug hingegen einer vorspringenden Ecke der Leitstruktur, welcher das Fahrzeug abstandsgeregelt folgt, so wird, in der anderen Richtung, der sich plötzlich bei Auffahren auf die vorspringende Leitstrukturpartie verringernde Abstand registriert und dies als Steuergrösse bzw. Steuersignal für die Antriebs- oder Lenkorgane eingesetzt, derart, dass das Fahrzeug eine entsprechende Kurve fährt, womit die Abstandsermittlung in der ersten Richtung, als IST-Wert-Ermittlung die Regelung weiter aufrecht erhält. In diesem Fall fährt das Fahrzeug immer einseitig abstandsgeregelt, behält eine, wie auch immer geformte, Leitstruktur abstandsgeregelt auf seiner einen Seite.

Im weiteren wird vorgeschlagen, dass man am Fahrzeug detektiert, wenn es ein bereits abgefahrenes Arealgebiet wieder befährt. Beispielsweise ist dies wesentlich, wenn einer in sich geschlossenen Bahn gefolgt wird, wie beispielsweise der Aussenwandung eines Bodenareals, um zu entscheiden, wann der Abstand-SOLL-Wert verändert werden soll.

Hierzu wird vorgeschlagen, dass man ab Fahrzeug eine bereits abgefahrene Bahn durch Erfassen von Antriebsorgan- und/oder Lenkorgan-Bewegungen ermittelt und daraus Uebereinstimmung einer momentanen Position des Fahrzeuges mit einer vormals eingenommenen Position feststellt.

Eine weitere vorgeschlagene Möglichkeit hierzu besteht darin, dass man die Detektion durch Registrierung einer Markierung an vorgegebener Position bezüglich des Fahrzeuges vornimmt.

Aufgrund der Dekektion, dass das Fahrzeug auf ein bereits abgefahrenes Arealgebiet wieder aufgefahren ist, wird nun, wie weiter vorgeschlagen, der Abstand-SOLL-Wert geändert.

Ein Fahrzeug, das nun einer in sich geschlossenen Leitstruktur erfindungsgemäss abstandsgeregelt folgt und bei dem man den Abstand-SOLL-Wert jedesmal wenn es auf ein bereits abgefahrenes Arealgebiet auffährt, verändert, fährt eine spiralförmige Spur. Dies auch dann, wenn das Fahrzeug seine vormals gelegte Spur bei weiteren Umläufen immer wieder ausnützt.

Fährt ein derart abstandsgeregeltes Fahrzeug auf ein freistehendes Hindernis auf, dem es vormals nicht begegnet ist, so müssen zusätzliche Steuervorgänge als Reaktion darauf vorgesehen sein. Wie auch immer solche Steuerreaktionen ausgelegt werden, muss das Fahrzeug vorerst überhaupt erkennen, dass es sich um ein freistehendes Hindernis handelt, damit es nicht einfach mit dem dann vorherrschenden Abstand-SOLL-Wert das Hindernis umfährt und damit möglicherweise einen breiten, nicht abgearbeiteten Streifen um das Hindernis herum freilässt. Hierzu wird vorgeschlagen, dass man eine abgefahrene Fahrzeugbahn registriert und mindestens Teile davon abspeichert. Aus diesen abgespeicherten Teilen einer in sich geschlossenen Fahrzeugbahn werden mindestens Teile einer unmittelbar darauf abzufahrenden Fahrzeugbahn mit geändertem Abstand-SOLL-Wert berechnet und ebenfalls abgespeichert. Weicht, danach, die durch das Fahrzeug tatsächlich abgefahrene Bahn bzw. deren Teile von den vorberechneten und gespeicherten Teilen ab, so wird auf Vorliegen eines freistehenden Hindernisses auf dem Bodenareal geschlossen.

Ein weiterer, zu berücksichtigender Fall ist derjenige, dass Engnisse vorliegen, durch welche beispielsweise zwei sich aufweitende Raumarealteile getrennt werden. Um dies zu erfassen, wird weiter vorgeschlagen, dass man eine abgefahrene Fahrzeugbahn erfasst, Kreuzungsstellen und/oder Ueberlappungen feststellt und daraus auf Vorliegen von Engnissen schliesst.

Im weiteren wird vorgeschlagen, dass man vorausgewählte Teile der Wand als regelwirksam auswählt und/oder eine zeitliche Reihenfolge festlegt, mit welcher diese Teile regelwirksam werden sollen. Durch diese Massnahme wird es z.B. möglich, bei mit Hindernissen und Engnissen überstellten Bodenarealen eine Bodenarealunterteilung in einfach strukturierte Teilbereiche vorzunehmen, mit dem Fahrzeug beispielsweise einen ersten Teilbereich, unabhängig von den übrigen, spiralförmig abzuarbeiten, dann in einen zweiten Teilbereich zu fahren, und nun diesen, unabhängig von den übrigen, spiralförmig abzuarbeiten etc.

Durch die Vorauswahl, welche Teile der Wand regelwirksam werden sollen und/oder Vorgabe der zeitlichen Reihenfolge, mit welcher sie regelwirksam erfasst werden sollen, ist es auch ohne weiteres möglich, beliebige vorgegebene Bahnen anzusteuern. Die Vorgabe, welche der Leitstrukturen wann regelwirksam werden sollen, kann ohne weiteres dadurch erfolgen, dass man am Fahrzeug die abgefahrene Bahn erfasst, und an vorgegebenen Punkten dieser "relativen" Bahn, die ohne weiteres fehlerbehaftet sein kann, steuert, auf welcher Seite bezüglich des Fahrzeuges, allenfalls in welchem Abstandsrahmen bzw. -Fenster nun derjenige Wandteil erscheint, der regelwirksam werden soll. Fehlerbehaftet kann die vom Fahrzeug erfasste Bahn deshalb ohne weiteres sein, weil nach Erkennen des Wandteils, der regelwirksam werden soll, eine genaue Einregelung des Abstandes Fahrzeug/Wand erfolgt, unabhängig davon, an welcher Position das Fahrzeug diesen Wandteil erkannt hat.

Das erfindungsgemässe Verfahren eignet sich nach Anspruch 12 ausgezeichnet für eine Verwendung, worin anstelle einer Wand eine Spur gelegt wird, die dann bezüglich Fahrzeugsteuerung wie die Wand wirkt.

Die Erfindung wird anschliessend beispielsweise anhand von Figuren erläutert.

Es zeigen:

| | |
|---|---|
| Fig. 1 | schematisch den Aufbau eines erfindungsgemässen Fahrzeuges, |
| Fig. 2 | auf einem Bodenareal die erfindungsgemässe Abstandsführung des Fahrzeuges gemäss Fig.1, |
| Fig. 3a | anhand eines Funktionsblockdiagrammes eine erfindungsgemässe Regelung/Steuerung am Fahrzeug gemäss Fig. 1, |
| Fig. 3b | drei verschiedene Varianten an einem erfindungsgemässen Fahrzeug zum Detektieren, wann es auf einen bereits abgefahrenen Abschnitt wieder auffährt, |
| Fig. 4 | eine weitere Führungsvariante eines erfindungsgemässen Fahrzeuges mit, links, der durch ein solches Fahrzeug durchlaufenen Bahn, |
| Fig. 5 | das Verhalten eines erfindungsgemässen Fahrzeuges mit Bahnkriterien zur Feststellung eines Engnisses, |
| Fig. 6 | anhand eines Ausschnittes des Bodenareals mit einem freistehenden Hindernis das Verhalten eines erfindungsgemässen Fahrzeuges zur Ermittlung von Kennzeichen für freistehende Hindernisse, |
| Fig. 7 | ein Blockdiagramm einer erfindungsgemässen Regelung/Steuerung eines Fahr- |

zeuges, unter Ausnützung der für Engnisse und Hindernisse gefundenen Kriterien,

Fig. 8a ein kompliziert strukturiertes Raumareal und eine einfache erfindungsgemässe Fahrzeugsteuerung darin,

Fig. 8b, c Signalflussdiagramme für eine, wie in Fig. 8a dargestellte Fahrzeugsteuerung,

Fig. 9 ein Blockdiagramm einer erfindungsgemässen Steuerung für das Fahrzeug, mit der erfindungsgemässen Regelung.

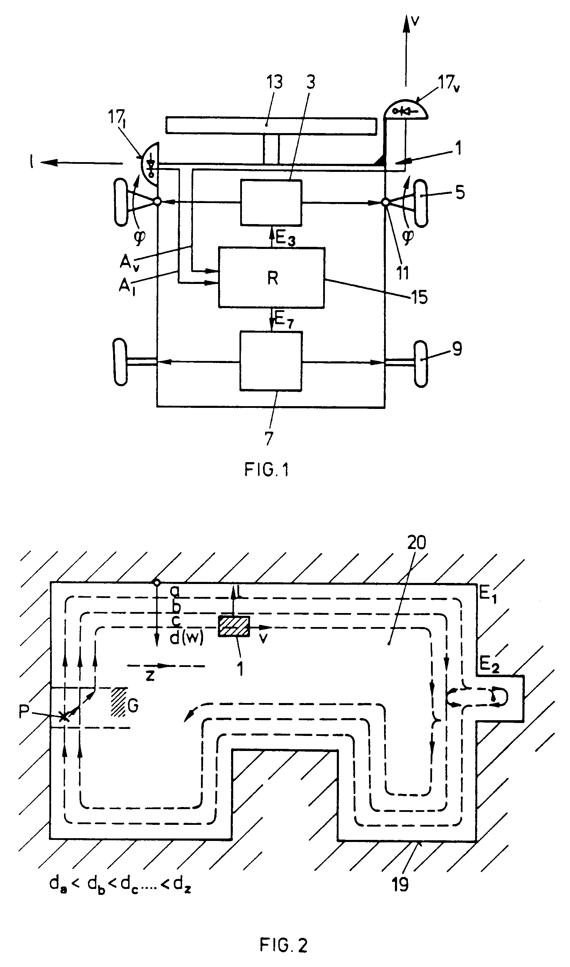

In Fig. 1 ist, rein schematisch, der prinzipielle Aufbau eines Fahrzeuges 1 dargestellt. Es kann sich dabei um einen Rasenmäher, eine Bodenkehrmaschine, einen Staubsauger, eine Strassenkehrmaschine, ein Transportfahrzeug etc. handeln. Mechanisch ist es je nach Einsatzzweck ausgebildet. Das Fahrzeug 1 umfasst, als Beispiel, Vorderräder 5, Hinterräder 9, einen steuerbaren Antrieb 7 für die Hinterräder, der über Steuereingänge $E_7$ für Vor- und Rückwärtslauf, beides bei variablen Geschwindigkeiten, ansteuerbar ist. Die als Lenkräder ausgebildeten Vorderräder 5 sind, wie mit $\phi$ angedeutet, mittels einer Lenksteuerung 3 um Gelenke 11 schwenkbar. Beim Antrieb 7, wie auch bei der Lenksteuerung 3 mit Steuereingängen $E_3$, kann es sich beispielsweise um Elektromotoren, dabei bei der Lenksteuerung 3 um Linearmotoren, handeln, die über entsprechende Getriebe auf die ihnen zugeordneten Räder 5 bzw. 9 wirken. Am Fahrzeug 1 können ein oder mehrere schematisch dargestellte Werkzeuge 13 vorgesehen sein, wie ein Saugbalken, ein Reinigungsbalken, eine Mähvorrichtung etc. mit entsprechenden, hier nicht dargestellten, bekannten Antrieben. Am Fahrzeug sind weiter Distanzmesseinrichtungen, wie Ultraschallsensoren, vorgesehen, ein nach vorne V wirkender Distanzsensor $17_v$ sowie ein nach links wirkender Distanzsensor $17_l$. Bei dieser Anordnung der Sensoren ist das Fahrzeug für eine Abstandsreglung nach links ausgelegt. Ausgänge $A_v$, $A_l$ wirken auf eine am Fahrzeug vorgesehene Regeleinrichtung 15, die aufgrund von Signalen an den Ausgängen $A_l$, $_v$ die Lenksteuerung 3 bzw. den Antrieb 7 ansteuert.

In Fig. 2 ist ein durch eine Berandungsstruktur, wie durch Wände 19, als ortsfeste Leitstruktur definiertes Raumareal 21 dargestellt. Gestrichelt ist schematisch eine spiralförmige Bewegungsbahn eines Fahrzeuges gemäss Fig. 1 ab einem Startpunkt P dargestellt.

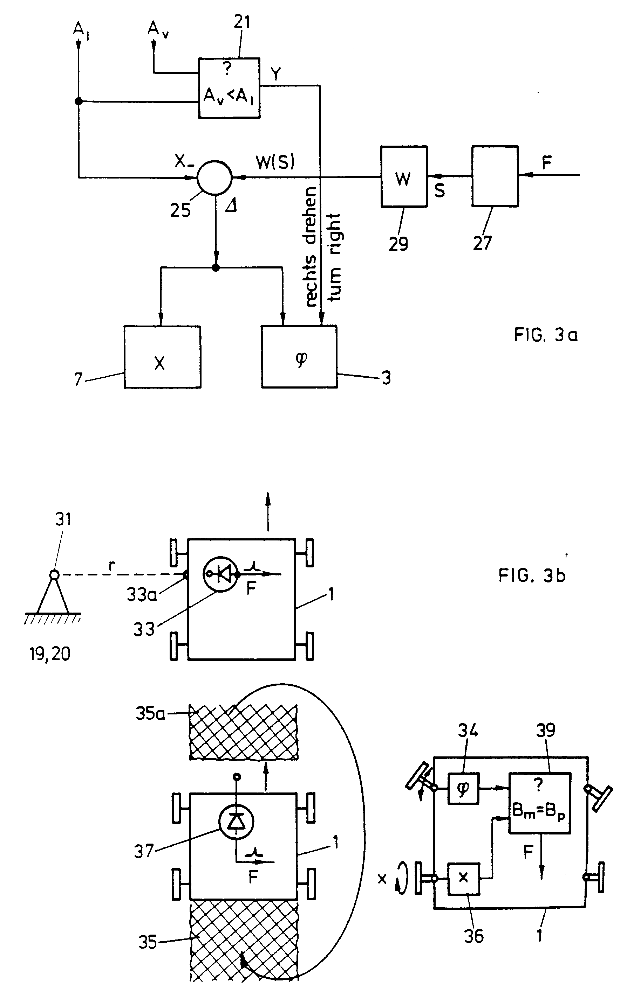

In Fig. 3a ist die Ausbildung der Regeleinrichtung 15 gemäss Fig. 1 zur Realisation der in Fig. 2 dargestellten Abarbeitungsbahn dargestellt.

Die Ausgangssignale $A_l$ und $A_v$ der Distanzsensoren 17 werden auf eine Vergleichseinheit 21 geführt, woran geprüft wird, ob der Abstand nach vorne kleiner ist als der geregelte Abstand nach links. Das Signal $A_l$ des Sensors $17_l$ wirda als Regelgrösse bzw. IST-Wert X einer Differenzeinheit 25 aufgeschaltet, deren zweitem Eingang ein Abstandsführungssignal bzw. SOLL-Wert-Signal W aufgeschaltet ist. Die Regeldifferenz $\Delta$ wird auf die Lenksteuerung 3, allenfalls auf den Antrieb 7, geschaltet und steuert über diese Funktionseinheiten das Fahrzeug so, dass die Regelgrösse X (IST-Wert) mindestens nahezu gleich der Führungsgrösse W (SOLL-Wert) wird. Während das Signal $A_l$ als Regelgrösse bzw. IST-Wert im Regelkreis wirkt, steuert das Signal $A_v$ des vorderen Sensors $17_v$, sobald es den Signalwert von $A_l$ unterschreitet, was an der Einheit 21 geprüft wird, als Steuersignal die Lenksteuerung 3 an und bewirkt eine Umlenkung des Fahrzeuges nach rechts, bei einem linksgeregelten Fahrzeug. Anstelle eines Vergleichs von $A_v$ mit $A_l$ kann es vorteilhaft sein, die stabilere Grösse W mit $A_v$ zu vergleichen. Eine Führungsgrössensteuerung 27 wird in noch zu beschreibender Art und Weise durch ein Steuersignal F angesteuert und schaltet über einen Führungsgrössengeber 29 in Funktion des Steuersignals F verschiedene Führungsgrössen- bzw. SOLL-Wert-Signale W auf die Differenzeinheit 25 auf. Ein Umschalten des Führungsgrössensignals W erfolgt immer dann, wenn das Fahrzeug gemäss Fig. 2 eine Umlaufbahn geschlossen hat. Um dies zu detektieren, bestehen verschiedene Möglichkeiten, wie in Fig. 3b schematisch dargestellt.

Die erste Möglichkeit besteht darin, dass am Startpunkt P gemäss Fig. 2 an der Wand 19 oder auf dem Boden eine eigens dafür vorgesehene Markierung gesetzt wird oder ein Merkpunkt, wie eine Kante der Wand 19 bzw. des Bodens 20, mittels eines Markierungsdetektors 33 am Fahrzeug 1 detektiert wird. Jedesmal, wenn die Markierung 31 in einer vorgegebenen Lage r vom Fahrzeug 1 aus detektiert wird, wird ein Führungsgrössen-Steuersignal F erzeugt, wodurch der Führungsgrössenwert W am Führungsgrössengeber 29 verändert wird, gemäss Fig. 2 vergrössert wird, und damit auch der geregelte Abstand d-(w).

Eine zweite Möglichkeit besteht darin, mit dem Fahrzeug 1 eine Spur 35 auch nur als Markierung zu legen. Dabei kann es sich bei Nassreinigung um eine Feuchtigkeitsspur, bei einem Rasenmäher um eine Mähspur handeln, die beide gut detektierbar sind. Ist die Arbeitsspur schlecht detektierbar, so kann vom Fahrzeug 1 aus eine eigens hierfür vorgesehene Spur gelegt werden, z.B. eine Feuchtigkeitsspur, die nur während relativ kurzer Zeit bestehen bleibt und danach verdunstet. Am Fahrzeug 1 ist ein Spurdetektor 37 vorgesehen, der detektiert, wann das Fahrzeug 1 auf eine bereits gelegte Spur 35, mit 35a bezeichnet, auffährt. Dann wird ein Führungsgrössen-Aenderungssignal F ausgelöst und beispielsweise, wiederum gemäss Fig. 2, am Führungsgrössengeber 29 eine grössere Führungsgrösse W vorgegeben.

Eine dritte Variante besteht darin, dass am Fahrzeug Aufnehmer 34 und 36 vorgesehen sind, die Lenkausschläge $\phi$ und Vorschubwege x an den Lenk- bzw. Antriebsorganen aufnehmen. Diese werden einer Rechen- und Speichereinheit 39, vorzugsweise mit einem $\mu C$, eingegeben, welche die abgefahrene Bahn B laufend aus den Richtungsund Längenangaben x, $\phi$ ermittelt und abspeichert. Die Bahndaten $B_m$, entsprechend der Abfolge der Fahrzeug-Momentanposition, werden dabei vorerst mit dem Bahnpunkt $B_p$ bei Beginn eines Umlaufs verglichen, so dass, wenn das Fahrzeug 1, gemäss Fig. 2, eine Umlaufbahn geschlossen hat, dies durch Uebereinstimmung des Momentanwertes $B_m$ mit dem gespeicherten Wert $B_p$ bei Beginn dieses Umlaufes detektiert wird. Bei dieser Uebereinstimmung wird wiederum das Führungsgrössen-Aenderungssignal F ausgelöst.

Auf dem Bodenareal 20, gemäss Fig. 2 gesetzt, durchläuft das mit einer Steuerung gemäss Fig. 3a versehene Fahrzeug 1 eine spiralförmige Bahn. Es hält bezüglich der Wände 19 beim ersten Umlauf a einen Abstand $d_a$ entsprechend einem Führungssignal $W_a$ ein. Wenn die Bahn a geschlossen ist und somit ein Führungsgrössen-Aenderungssignal F ausgelöst wird, wird die Führungsgrösse W vergrössert, generell auf $W_z$, und das Fahrzeug durchläuft eine geschlossene Bahn z mit dem zugeordneten Abstand $d_z$ von den Wänden 19. Dabei folgt das Fahrzeug auch ein- bzw. ausspringenden Wandbereichen. Fährt es in eine Ecke $E_1$, so detektiert die Vergleichseinheit 21, dass der Abstand zum vorderen Sensor $17_v$ gemäss Fig. 1 kleiner wird als derjenige zu Sensor $17_l$.

Dadurch wird die Lenksteuerung 3 angesteuert und eine Rechtskurve gefahren. Der mit dem Sensor $17_v$ detektierteAbstand vergrössert sich wieder und der mit Sensor $17_l$ detektierte wird wiederum als Regelgrösse bzw. IST-Wert aufgeschaltet. Bei einer rückspringenden Ecke $E_2$ detektiert der Sensor $17_l$, dass der ihm zugeordnete geregelte Abstand $d_l$ plötzlich gross wird, was zu einer entsprechenden Regeldifferenz gemäss Fig. 3a führt. Um diese auszuregeln, leitet das Gefährt eine Kurvenfahrt links ein, womit der durch den Sensor $17_l$ detektierte Abstand wieder kleiner wird und schliesslich auf den Führungswert W eingeregelt wird.

Anstelle des Einsatzes rauminhärenter Strukturen als Leitstrukturen von Berandungswänden, worunter auch Farbkontraste, Materialkontraste etc. verstanden seien, können nun auch ohne weiteres Leitstrukturen gelegt werden, wie sich nach einiger Zeit verflüchtigende Spray-Spuren. Dies kann mit wenig Aufwand erfolgen, weil die erfindungsgemässe SOLL-Abstandsregelung die Möglichkeit schafft, solche Strukturen zur Fahrzeugführung entlang von Wegstrecken auszunützen, die um ein Vielfaches länger sind als die Ausdehnungen der Leitstrukturen selbst betragen. So ist in Fig. 2 die Länge des Weges, auf dem das Fahrzeug mit wenig Aufwand genau geregelt fährt, die Totallänge der Spirale d.h. um ein Vielfaches länger als die benötigte Leitstrukturlänge, d.h. die Berandungslänge.

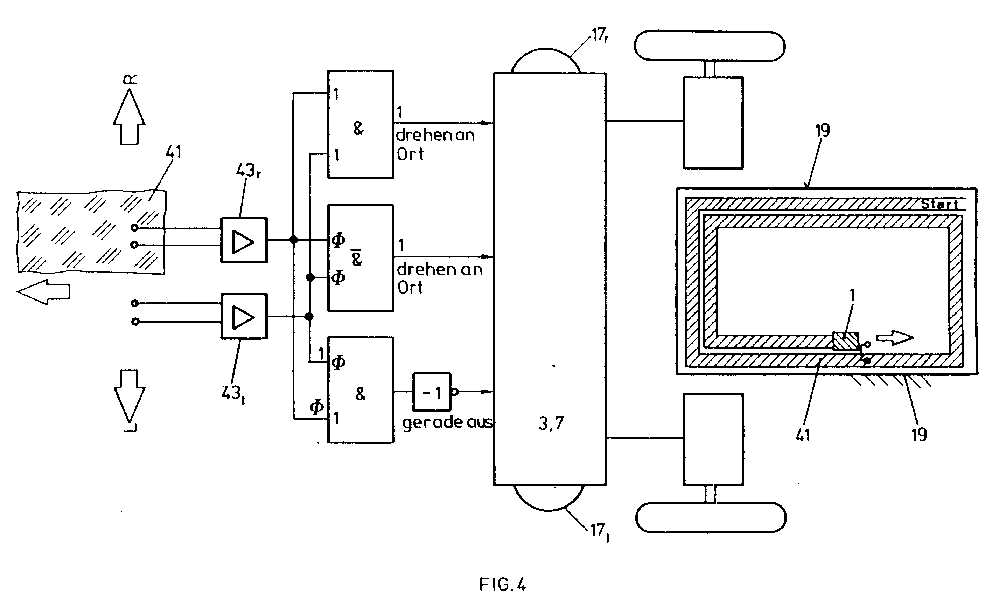

In Fig. 4 ist die erfindungsgemässe Steuerungsart dargestellt, bei der die Leitstruktur durch das Fahrzeug selbst gelegt wird. Zu Beginn wird das Fahrzeug, z.B. wie vormals beschrieben, mittels der Sensoren 17, auf einem vorgegebenen Abstand entlang den Wänden 19, gemäss Fig. 1 oder z.B. manuell geführt. Dabei legt das Fahrzeug eine Spur 41. Im Unterschied zur Spur 35, die anhand von Fig. 3 beschrieben wurde, muss die Spur 41 hier vom Fahrzeug 1 wenigstens nahezu durchgehend gelegt werden. In Fig. 3 genügt es an sich, wenn die Spur 35 nur im Bereiche der Startposition entsprechend P, d.h. in einem, wie in Fig. 2 gestrichelt angedeuteten Bereich G, gelegt wird. Bevorzugterweise ist die Spur 41 eine Arbeitsspur, z.B. bei Nassreinigung eine Feuchtigkeitsspur. Vorne am Fahrzeug 1 sind, nebst allenfalls dem Abstandssensor $17_v$, Spursensoren $43_r$ bzw. $43_l$ vorgesehen. Hinterlässt das Fahrzeug 1 eine Feuchtigkeitsspur, so handelt es sich dabei um Feuchtigkeitssensoren. Die beiden Sensoren 43 detektieren, ob sich unter dem Fahrzeug eine Spur 41 befindet oder nicht. Hat das Fahrzeug eine wie auch immer geführte erste Umlaufbahn zurückgelegt, so läuft es auf die eben gelegte Spur 41 auf und es wird, wie dargestellt, durch die Sensoren 43 entlang der vormals gelegten Spur 41 geführt. Dieser Spurnachlauf bei dieser Ausführungsvariante entspricht wiederum einer Abstandsregelung bezüglich Strukturen des Raumes, nämlich der Spur 41, wobei aber in diesem Fall keine SOLL-Abstandssteuerung erfolgt: Der Abstand wird vorgegeben, vorzugsweise so, dass sich eine Spur dicht oder gar überlappend an die andere legt.

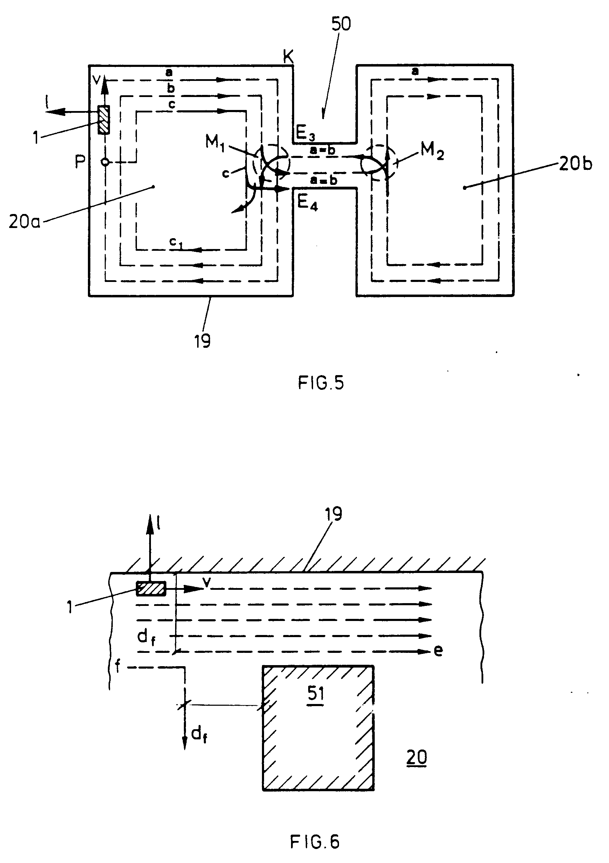

Die bisher beschriebene Steuerung eignet sich, vorerst ohne einen weiteren Ausbau, für das Abarbeiten von Bodenarealen ohne Engnisse und/oder freistehende Hindernisse. Anhand von Fig. 5 wird die Situation an Engnissen, anhand von Fig. 6 an freistehenden Hindernissen erläutert. Als Engnisse seien Passagen verstanden, durch welche das Fahrzeug mindestens einmal einseitig abstandsgeregelt hin- und zurückfahren kann, jedoch bei sich weiter vergrösserndem, einseitigem Abstand zur jeweiligen Wand, wie in Fig. 5 dargestellt, in einem Raumbereich "gefangen" wird. Gemäss Fig. 5, die einen derartigen Raum mit Engnis 50 zeigt, läuft das Fahrzeug zuerst auf der Bahn a. Nach Vergrösserung des Führungsgrössenwertes W, aufgrund des Signals F gemäss Fig. 3, im Bereiche P, läuft das Fahrzeug auf Bahn b. Dabei ist z.B. die Bewegungsbahn b im Engnis 50, mit umgekehrter Durchlaufrichtung, mit der Bewegungsbahn a bereits identisch, Vergrössert sich die Führungsgrösse und damit der Abstand weiter, woraus Bahn c resultiert, so wird das Fahrzeug, da sich der erfasste Abstand zur linksliegenden Wand bei $E_3$ plötzlich vergrössert, vorerst nach links eindrehen, worauf der Sensor $17_v$ die vor ihm liegende Engnisecke $E_4$ erfasst. Das Fahrzeug 1 schwenkt aufgrund des Steuersignals von der Einheit 21 gemäss Fig. 3a, wie bei einer Ecke, beispielsweise bei K, wieder nach rechts und folgt, wie bei $c_1$ angedeutet, abstandsgeregelt den Wänden 19 des linken Teilgebietes $20_a$. Dieses linke Gebiet wird bis zum Erreichen des Zentrums abgearbeitet. Das rechte Teilgebiet 20b rechts des Engnisses 50 wird nicht abgearbeitet. Um dieses Problem in der nachfolgend geschilderten Art zu lösen, ist es notwendig, dass das Fahrzeug derartige Engnisse überhaupt als solche erkennt, woraus Konsequenzen bezüglich des Steueralgorhythmus, d.h. der Aufschaltung der Abstandsführungsgrössen, gezogen werden können.

Zur Lösung dieses Engnisproblems wird davon ausgegangen, dass dann, wenn sich eine Umlaufbahn, wie b, zweimal kreuzt, in den Bereichen $M_1$ und $M_2$ dazwischen ein Engnis vorliegen muss, da eine Kreuzung nur durch sich überlappende, geregelte Abstände von zwei sich gegenüberliegenden Wandbereichen aus herrühren kann. Es werden somit Bahnkreuzungsstellen, allenfals als Grenzfall Ueberlappungsbereiche, als Kriterium für "Engnisse" detektiert und entsprechende Eingriffe auf die Führungsgrössen-Steuerung 27, 29 gemäss Fig. 3a vorgenommen. Die Lage und Anzahl derartiger Kreuzungsstellen erlaubt eine Identifikation der Raumstruktur und damit eine entsprechende Führungsgrössen-Steuerung.

In Fig. 6 sind die Verhältnisse bei Vorliegen eines freistehenden Hindernisses 51 dargestellt. Ein freistehendes Hindernis sei definitionsgemäss ein Hindernis, das bezüglich einer Leitstruktur, einer Berandungswandung 19 mit einem solchen Abstand auf dem Raumareal 20 steht, dass das Fahrzeug 1 mindestens einmal unbehelligt zwischen Wandung 19 und Hindernis 51 durchfahren kann. Nach sukzessiver Vergrösserung des geführten Abstandes d wird das Fahrzeug 1 irgendwann, wie auf Bahn f, auf das Hindernis stossen und, wie bei einer Raumecke K von Fig. 5 oder 2, mit dem eingestellten, geführten Abstand $d_f$ das Hindernis umfahren. Es bleibt damit um das Hindernis 51 herum ein nicht bearbeiteter, möglicherweise breiter Streifen. Auch hier lässt sich ein einfaches Kriterium für "Hindernisse" finden. Ein freistehendes Hindernis liegt dann vor, wenn die momentan durchlaufene Bahn f des Fahrzeuges 1 von der vorgängig durchlaufenen Bahn e, unter Berücksichtigung des neu aufgeschalteten Führungswertes $W_f$ und damit der Abstandsdifferenz $d_f - d_e$, abweicht.

Da bei Vorliegen eines Engnisses Kreuzungen der Bahnen auftreten, nicht jedoch, wie aus Fig. 6 ersichtlich, beifreistehenden Hindernissen und umgekehrt, ein Abweichen von einer aus der vormalig durchlaufenen Bahn und dem neu eingestellten Abstand berechneten Bahn, wohl bei Vorliegen eines freistehenden Hindernisses, nicht jedoch bei Vorliegen eines Engnisses auftritt, bzw. hier erst, wenn das Fahrzeug nicht mehr durch das Engnis durchlaufen kann, stehen Kriterien zur Verfügung, um gezielt Steuerungsalgorhythmen für die Führungsgrösse so aufzuschalten und einen Steuerrechner so zu programmieren, dass das Fahrzeug auf Hindernisse und Engnisse richtig reagiert. Dies ist, basierend auf diesen Erkenntnissen, für den auf diesem Gebiet versierten Fachmann ohne weiteres möglich.

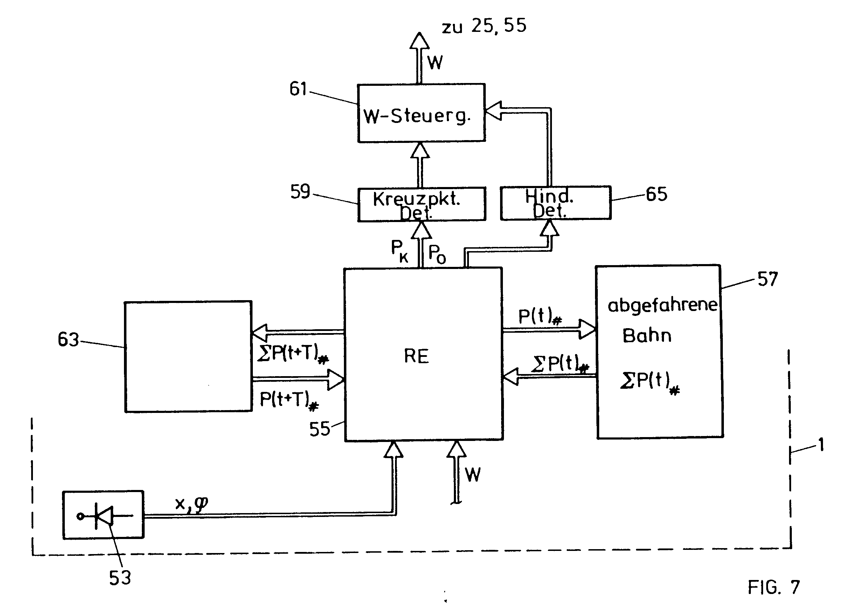

Die Grundstruktur einer für derartige Fälle konzipierten Steuerung ist in Fig. 7 dargestellt. Am Fahrzeug 1 werden Vorschubwege x und Lenkausschläge $\phi$ mittels entsprechender Detektoren 53 erfasst. Diese Grössen werden einer Recheneinheit 55 eingegeben. Die Recheneinheit 55 berechnet daraus bezüglich eines raumfesten Koordinatensystems die momentane Position P(t) des Fahrzeuges 1. Die entsprechenden Daten $P(t)_\#$ werden einem Bahnspeicher 57 eingegeben, worin mit der Gesamtheit $\Sigma$ der einzelnen Positionsdaten die abgefahrene Bahn gespeichert ist. Aus der Gesamtheit dieser Positionsdaten $\Sigma P(t)_\#$ und den momentanen Positionsdaten $P(t)_\#$ ermittelt die Recheneinheit 55 Kreuzungspunkte $P_K$ der eben durchlaufenen Bahn sowie Positionen $P_0$, an welchen eine durchlaufene Bahn sich schliesst, wie schematisch mit dem Block 59 dargestellt. Entsprechend der Lage der gefundenen Kreuzpunkte bzw. Schliesspunkte wird nach bestimmten Regeln die Führungsgrössen-Steuerung 61 angesteuert.

Bei Beendigung einer in sich geschlossenen Bahn wird zudem der Recheneinheit 55 das neu aufzuschaltende Führungsgrössensignal W als Eingangsgrösse zugeführt. Sie berechnet aus der in Speicher 57 gespeicherten, vormals abgefahrenen Bahn $\Sigma P(t)_\#$, unter Kenntnis des neuen Führungsgrössenwertes W, die unmittelbar danach abzufahrende Bahn $\Sigma P(t+T)_\#$ und lädt deren Daten in einen Referenzbahnspeicher 63. Während nun das Fahrzeug die neue Bahn abfährt, vergleicht die Recheneinheit 55 laufend die momentanen durch x und $\phi$ gegebenen Bahnpositionen $P(t)_\#$ mit den im Referenzbahnspeicher 63 abgespeicherten Referenzbahndaten $P(t+T)_\#$. Bei Abweichen der beiden Datensätze voneinander wird auf Vorliegen eines Hindernisses, wie mit dem Block 65 dargestellt, geschlossen und nach vorgegebenen Regeln auf die Führungsgrössen-Steuerung 61 eingegriffen.

Anstelle Engnisse und Hindernisse, wie vorgängig beschrieben, zu erkennen und für solche Fälle erarbeitete Steueralgorhythmen auszulösen, beruht das nachfolgend beschriebene Vorgehen darauf, komplizierte Raumareale in einfache Teilareale zu untergliedern und das Fahrzeug nach Abarbeitung eines Teilareals in ein weiteres zu überführen. Dies kann dadurch realisiert werden, dass die Regelung zeitweise unwirksam geschaltet wird und das Fahrzeug, wenn auch fehlerbehaftet, in einfachster Art und Weise auf einer in etwa vorgegebenen Bahn vom einen in den anderen Teilbereich übergeführt wird. Mit diesem Vorgehen wird auch ermöglicht, das Fahrzeug auf einer beliebigen vorgegebenen Bahn auf einem Bodenareal von einem Punkt zum anderen automatisch zu steuern, wobei das Fahrzeug wohl vorwiegend abstandsgeregelt wird, ihm aber vorgegeben wird, wann es welche in seinem "Blickfeld" erscheinenden Leitstrukturen als regelwirksame Leitstrukturen benützen soll.

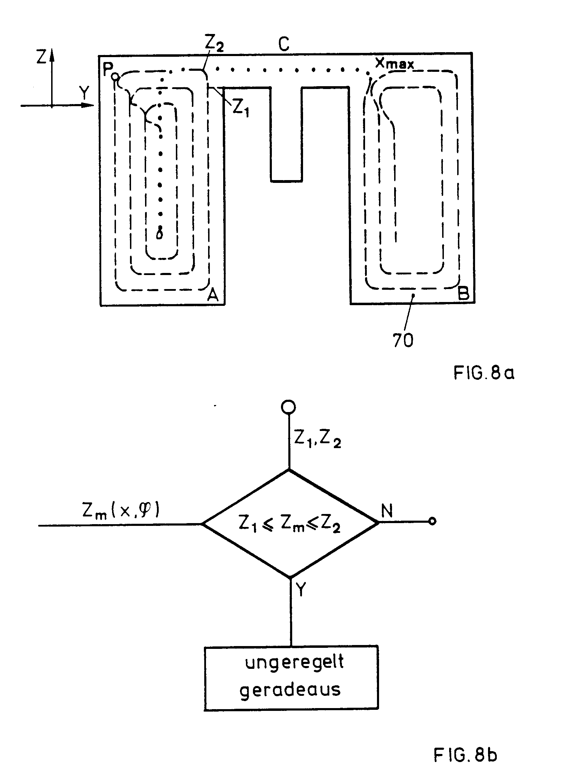

In Fig. 8a ist ein relativ kompliziert strukturiertes Raumareal 70 dargestellt. Dieses Raumareal 70 kann beispielsweise in die Bereiche A und B gegliedert werden. Verbunden werden diese Teilbereiche A und B durch ein Engnis C. Wie aus Fig. 8a ersichtlich, soll nun das Fahrzeug bei P gestartet, erst den Teilbereich A abarbeiten, wie wenn die übrigen Bereiche nicht existent wären, gestrichelt dargestellt, soll danach, punktiert dargestellt, beispielsweise ungeregelt, in den Bereich B gesteuert werden und dort, wiederum geregelt, diesen Bereich B abarbeiten, wie wenn die Bereiche A und C nicht vorhanden wären.

In Fig. 8b ist ein Signalflussdiagramm dargestellt, zur Erläuterung wie das Fahrzeug angesteuert wird, um nicht in das Engnis C einzufahren, d.h. vorerst nur den Bereich A abzuarbeiten. Hierzu werden Z-Koordinatenwerte $Z_1$ und $Z_2$ entsprechend der Lage des Engnisses C mit am Fahrzeug registrierten Momentanwerten $Z_m$ verglichen. Letztere werden, wie beschrieben worden ist, durch Auswertung von Längen- bzw. Richtungsnehmersignalen (x, $\phi$) an den Antriebs- bzw. Lenkorganen des Fahrzeuges bestimmt. Im Bereich zwischen den beiden vorgegebenen Werten $Z_1$ und $Z_2$ wird die Regelung aufgehoben und das Fahrzeug erhält die einfache Anweisung, geradeaus zu fahren. Bei Unterschreiten des Grenzwertes $Z_2$ wird das Fahrzeug in den geregelten Betrieb rückgeschaltet, so dass es das Teilgebiet A abarbeitet und sich nicht ins Engnis C führen lässt.

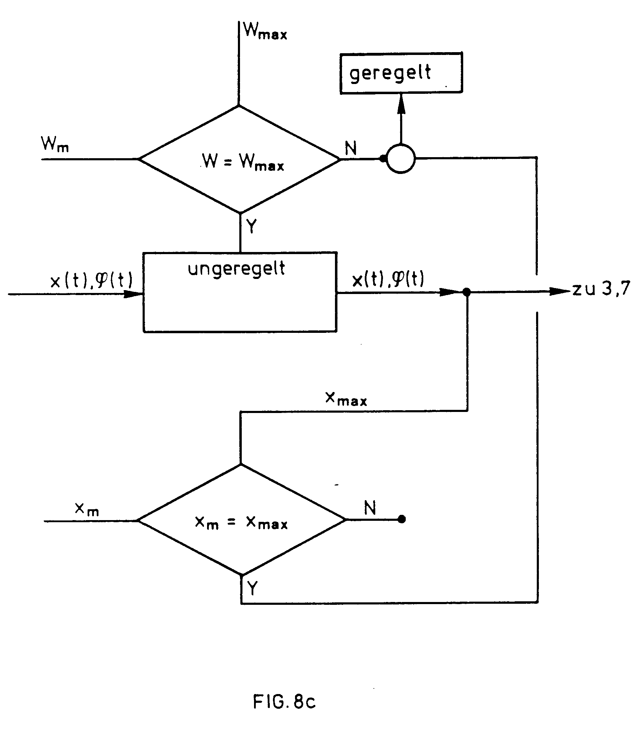

In Fig. 8c ist ein Signalflussdiagramm dargestellt, um das Fahrzeug nach Beendigung der Arbeit im Teilbereich A durch das Engnis C hindurch in den Teilbereich B überzuführen. Hierzu wird ein dem Teilbereich A entsprechender maximaler Abstandsführungswert bzw. -SOLL-Wert $W_{max}$ mit dem momentan aufgeschalteten Abstandsführungswert $W_m$ verglichen. Bei Uebereinstimmung wird die Regelung ausser Betrieb gesetzt und das Fahrzeug nach voreingegebenen Vorschub- und Lenkbewegungen x(t) bzw. $\phi$ (t) gesteuert. Im weiteren wird der so zurückzulegende maximale Vorschubweg $x_{max}$ mit dem momentanen, am Fahrzeugantrieb detektierten Vorschubweg $x_m$ verglichen und bei Uebereinstimmung das Fahrzeug wieder in die geregelte Betriebsart geschaltet: Es nimmt seine Arbeit, wieder geregelt, im Teilbereich B auf.

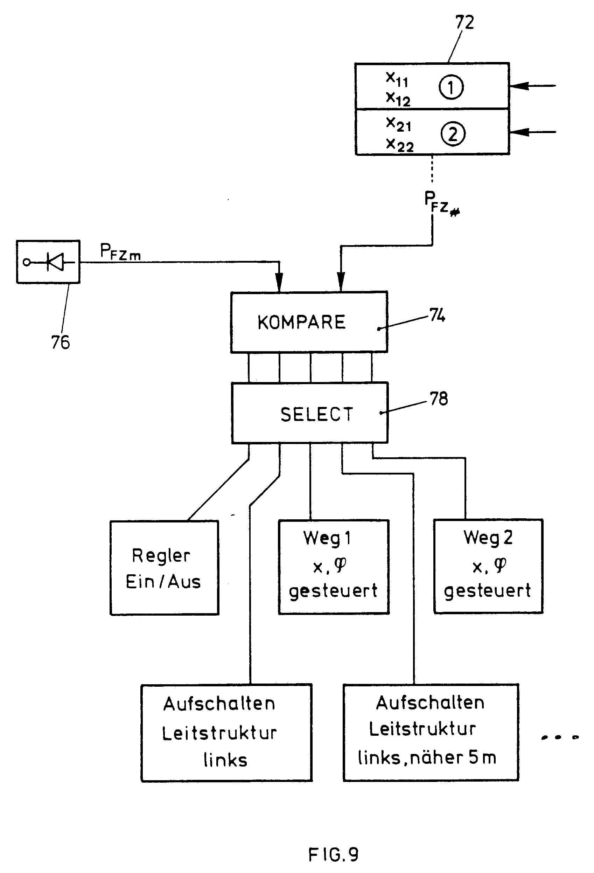

In Fig. 9 ist das Blockdiagramm eine Steuerung zur Ausführung von Operationen, wie sie anhand von Fig. 8a erläutert wurden, dargestellt. In einem Speicher 72 werden Datensätze eingegeben, die ausgewählte Positionen $P_{FZ\#}$ auf dem Bodenareal spezifizieren. An einem Komparator 74 werden diese Positionswerte mit Momentan-Positionswerten $P_{FZm}$, die am Fahrzeug mittels einer Detektoreinheit 76, die die vorbeschriebenen Antriebsorgan- und Lenkorgan-Nehmer für x und $\phi$ umfassen kann, registriert werden, verglichen. Je nachdem, mit welchen voreingegebenen Positionswerten $P_{FZ\#}$ die Momentan-Positionswerte $P_{FZm}$ übereinstimmen, wird über eine Selektionseinheit 78 der Regler ein- bzw. ausgeschaltet, ein Weg 1 durch Längen- und Lenkausschlagsteuerung x bzw. $\phi$ ungeregelt angesteuert oder ein Weg 2 oder es wird beispielsweise eine Leitstruktur, die nun links des Fahrzeuges liegt, regelwirksam detektiert. Liegen mehrere Strukturen links des Fahrzeuges, wird beispielsweise diejenige, die näher als 5m liegt, regelwirksam detektiert, etc. Auf diese Art und Weise ist es möglich, mit wenig Aufwand das Fahrzeug in einem Raumareal beliebig zu führen, dabei das erfindungsgemässe Abstands-Regelverfahren zu selektionierten Leitstrukturen immer wieder ausnützend.

In allen Fällen geht die vorliegende Erfindung somit davon aus, das Fahrzeug nach vorgegebenen Regeln bezüglich Strukturen abstandszuführen. Damit wird ermöglicht, die dem Raumareal inhärente Information optimal auszunützen; derartige Strukturen definieren ja das Raumareal. Dadurch wird es möglich, auch wenn komplizierte Raumstrukturen fehlerfrei zu durchlaufen sind, von einem einfachen Grundkonzept auszugehen und dazu mittels Relativorientierung Spezialfälle, wie Engnis-Durchfahren oder Hindernis-Umfahren, zu lösen. Dabei versteht es sich von selbst, dass sich dem Fachmann eine Vielzahl möglicher Regeln für das Lösen der genannten Spezialfälle anbietet.

**Patentansprüche**

1. Verfahren zur automatischen Steuerung eines Reinigungsfahrzeuges über ein abzuarbeitendes, mindestens teilweise durch aufragende Wände festgelegtes Bodenareal, bei dem das Fahrzeug entlang den Wänden mit vorgegebenem Abstand zuerst einmal umläuft, dabei ein links bzw. rechts vom Fahrzeug liegender Abstand zur Wand überwacht und, falls er vom vorgegebenen Abstand abweicht, korrigiert wird und, nach Beendigung des genannten Umlaufs, das Bodenareal automatisch weiterabgearbeitet wird, dadurch gekennzeichnet, dass für die Weiterabarbeitung entlang einer spiralähnlichen Bahn

a) die Beendigung des obgenannten Umlaufs detektiert wird,

b) der Abstand vom Fahrzeug zur Wand um einen bestimmten Betrag verändert wird,

c) ein weiterer Umlauf, in gleichem Drehsinn wie der vorangegangene, nun mit dem veränderten Abstand durchfahren wird,

d) die Beendigung des weiteren Umlaufs detektiert wird, und

die Schritte b) bis d) wiederholt werden.

2. Verfahren nach Anspruch 1, wobei das Bodenareal in mindestens zwei verbundene Teilareale (20a, 20b) unterteilt ist, dadurch gekennzeichnet, dass das Fahrzeug auf einer weiteren Bahn vom einen Teilareal ins andere überführt wird und die Teilareale als Bodenareale nach Anspruch 1 abgearbeitet werden.

3. Verfahren nach einem oder beiden der Ansprüche 1 oder 2, dadurch gekennzeichnet, dass mit dem Fahrzeug eine Spur gelegt wird und der Abstand vom Fahrzeug zur Wand durch Veränderung des Abstandes zu der auf einem vorangehenden Umlauf gelegten Spur verändert wird.

4. Verfahren nach einem der Ansprüche 1 bis 3, dadurch gekennzeichnet, dass ein weiterer Abstand in einer weiteren Richtung (v) bezüglich des Fahrzeuges überwacht wird als Steuergrösse (Y) für Antriebs- und/oder Lenkorgane des Fahrzeuges.

5. Verfahren nach einem oder mehreren der Ansprüche 1 bis 4, dadurch gekennzeichnet, dass am Fahrzeug detektiert wird, wenn es ein bereits abgefahrenes Arealgebiet wieder befährt.

6. Verfahren nach Anspruch 5, dadurch gekennzeichnet, dass ab Fahrzeug eine bereits abgefahrene Bahn durch Erfassen von Antriebsorgan- (x) und Lenkorgan- ($\phi$) -

bewegungen ermittelt wird und daraus Uebereinstimmung einer momentanen Position ($B_m$) des Fahrzeuges mit einer vormals eingenommenen Position ($B_p$) festgestellt wird.

7. Verfahren nach Anspruch 5, dadurch gekennzeichnet, dass die Detektion durch Registrierung einer Markierung (31) an vorgegebener Position (r) bezüglich des Fahrzeuges vorgenommen wird.

8. Verfahren nach einem oder mehreren der Ansprüche 1 bis 7, dadurch gekennzeichnet, dass durch Detektion eines bereits abgearbeiteten Arealgebietes die Beendigung eines Umlaufs detektiert wird.

9. Verfahren nach einem oder mehreren der Ansprüche 1 bis 8, dadurch gekennzeichnet, dass eine abgefahrene Fahrzeugbahn registriert wird und mindestens Teile davon abgespeichert (57) werden, aus den abgespeicherten Teilen einer Umlaufbahn Teile eines unmittelbar darauf abzufahrenden Umlaufes berechnet und abgespeichert (63) werden, bei Abweichen der danach durch das Fahrzeug abgefahrenen Bahnteile von den berechneten Teilen auf Vorliegen eines freistehenden Hindernisses (65) auf dem Bodenareal geschlossen wird.

10. Verfahren nach einem oder mehreren der Ansprüche 1 bis 9, dadurch gekennzeichnet, dass eine abgefahrene Fahrzeugbahn erfasst (55) und deren Kreuzungsstellen ($P_K$) und/oder Ueberlappungen festgestellt werden und daraus auf Vorliegen von Engnissen (59) geschlossen wird.

11. Verfahren nach einem oder mehreren der Ansprüche 1 bis 10, dadurch gekennzeichnet, dass der Abstand zu voraus gewählten Teilen der Wand überwacht wird und/oder die zeitliche Abfolge festgelegt wird, in welcher der Abstand zur Wand überwacht wird.

12. Verfahren nach Anspruch 3, dadurch gekennzeichnet, dass der erste Umlauf ohne Be

13. Automatisch gesteuertes Reinigungsfahrzeug zur Ausführung des Verfahrens nach einem der Ansprüche 1 bis 12 an einem abzuarbeitenden mindestens teilweise durch aufragende Wände festgelegten Bodenareals, mit einer in eine Richtung des Fahrzeuges wirkenden Abstandsmesseinrichtung ($17_l$, $43_r$, $43_l$), einer Abstandsvorgabeeinrichtung (29, 61), einer Einrichtung (33,37, 39) zur Detektion eines vom Fahrzeug abgefahrene Umlaufs entlang den Wänden mit vorgegebenem Abstand, einer Stelleinrichtung (34, 36) für die Fahrzeugbewegung, wobei mindestens zeitweise, in einem Regelkreis, der Ausgang ($A_I$) der Abstandsmesseinrichtung ($17_I$) und der Ausgang (W) der Vorgabeeinrichtung (29, 61) auf eine Differenzeinheit (25) geführt sind, deren Ausgang auf die Stelleinrichtung (3, 7) wirkt, wobei weiter die Einrichtung zur Detektion (37, 33) auf die Vorgabeeinrichtung (29, 61) wirkt, dadurch gekennzeichnet, dass die Abstandsmesseinrichtung ($17_I$, $43_r$, $43_l$), die Abstandsvorgabeeinrichtung (29, 61), die Stelleinrichtung (34, 36) sowie die Einrichtung zur Detektion derart miteinander wirkverbunden sind, das nach Detektion des vom Fahrzeug bereits abgefahrenen Umlaufs der Abstand vom Fahrzeug zur Wand um einen bestimmten Betrag mittels der Vorgabeeinrichtung verändert wird, das Fahrzeug derart angesteuert wird, dass es einen weiteren Umlauf auf dem abzuarbeitenden Bodenareal in gleichem Drehsinn wie der vorangegangene und mit dem veränderten Abstand von den aufragenden Wänden durchfährt, die Beendigung des weiteren Umlaufs mittels der Einrichtung zur Detektion detektiert wird, und so das Bodenareal in einer spiralähnlichen Bahn abgearbeitet wird. zug zu einer Wand durchlaufen wird und dabei eine erste Umlaufspur gelegt wird.

14. Fahrzeug nach Anspruch 13, dadurch gekennzeichnet, dass am Fahrzeug eine Spurlegeanordnung vorgesehen ist und die Abstandsmesseinrichtung eine Messeinrichtung ($43_r$, $43_l$) für den Abstand des Fahrzeuges von einer gelegten Spur (41) umfasst.

15. Fahrzeug nach einem oder mehreren der Ansprüche 13 oder 14, dadurch gekennzeichnet, dass die Abstandsmesseinrichtung in zwei fahrzeugfeste Richtungen wirkende Distanzmessorgane ($17_I$, $17_v$) umfasst, wobei das eine ($17_I$) mindestens zeitweise mit der Differenzeinheit (25) verbunden ist, das andere ($17_v$) als Steuersignalgeber mit der Stelleinrichtung (3, 7) wirkverbunden ist.

16. Fahrzeug nach einem oder mehreren der Ansprüche 13 bis 15, dadurch gekennzeichnet, dass am Fahrzeug (1) eine Detektoreinheit (33) für eine vorgegebene Markierung an vorgegebener Fahrzeugposition (31) vorgesehen ist, wobei die Detektoreinheit (33) ein Signal (F) abgibt, wenn sie die Markierung (31) detektiert.

17. Fahrzeug nach Anspruch 16, dadurch gekennzeichnet, dass die Detektoreinheit (33) ein Detektorfenster ($33_a$) aufweist und ein Signal (F) abgibt, wenn die Markierung am Fenster ($33_a$) erscheint.

18. Anordnung nach Anspruch 16, dadurch gekennzeichnet, dass Fahrzeugbewegungslängen- (36) und -richtungs- (34) -nehmer vorgesehen sind und eine Speichervorrichtung (39) zur Speicherung von Nehmer-Ausgangssignalen als Markierung.

19. Anordnung nach einem oder mehreren der Ansprüche 13 bis 18, dadurch gekennzeichnet, dass die Einrichtung (33, 37, 39) zur Detektion ausgangsseitig (F) auf einen Steuereingang der Abstandsvorgabeeinrichtung (27, 29, 61) wirkt.

20. Fahrzeug nach einem oder mehreren der Ansprüche 13 bis 19, dadurch gekennzeichnet, dass Fahrzeugbewegungslängen- (x) und -richtungs- (34) -nehmer vorgesehen sind sowie eine Recheneinheit (15, 55), mit der die Ausgänge der Nehmer verbunden sind und die aus den Nehmersignalen Momentan-Positionen (P) des Fahrzeuges (1) berechnet, sowie eine Speichereinheit (57) für die Positionen ($\Sigma$ P(t)-#), mit der Recheneinheit (55) in Verbindung stehend, weiter die Einrichtung zur Detektion eine Vergleichseinheit zum Vergleich momentaner Fahrzeugpositionen (P(t)) mit in der Speichereinheit (57) gespeicherten Positionswerten aufweist, zur Ermittlung von Uebereinstimmung momentaner Fahrzeugpositionen mit vormaligen Fahrzeugpositionen.

21. Fahrzeug nach Anspruch 20, dadurch gekennzeichnet, dass ein Referenzbahnspeicher (63) vorgesehen ist, der mit der Recheneinheit (55) in Wechselverbindung steht, wobei die Recheneinheit aufgrund von Positionsdaten in der Speichereinheit (57) und eines zukünftig durch die Abstandsvorgabeeinrichtung vorzugebenden Abstandswertes (W) eine zukünftige Positionsabfolge des Fahrzeuges berechnet und im Referenzbahnspeicher (63) abspeichert, und dass eine Vergleichseinheit vorgesehen ist, die die momentanen Positionen des Fahrzeuges (1) mit im Referenzbahnspeicher (63) gespeicherten Positionen vergleicht, zur Ermittlung von nicht vorausberechneten und damit unerwarteten Fahrzeugbahnabweichungen.

22. Fahrzeug nach einem oder mehreren der Ansprüche 13 bis 21, dadurch gekennzeichnet, dass eine Steuereinheit vorgesehen ist, deren Ausgang die zeitweise Abschaltung des Regelkreises steuert.

## Claims

1. Process for automatically controlling a cleaning vehicle over an area of ground, on which work is to be effected and which is at least partially defined by upright walls, wherein the vehicle first completes a circuit along and at a preset distance from the walls, while so doing the distance to left or right of the vehicle from the wall is monitored and, if it differs from the preset distance, is corrected and, on completion of said circuit, work on the area of ground continues automatically, characterized in that, for work continuation along a spiral-like path,
   a) completion of the above-mentioned circuit is detected,
   b) the distance of the vehicle from the wall is varied by a specific amount,
   c) a further circuit, in the same direction of rotation as the preceding circuit but now at the altered distance, is completed,
   d) completion of the further circuit is detected, and
   steps b) to d) are repeated.

2. Process according to claim 1, where the area of ground is subdivided into at least two connected sub-areas (20a, 20b), characterized in that the vehicle is transferred along a further path from one sub-area into the other and the sub-areas are worked as areas of ground according to claim 1.

3. Process according to one or both of claims 1 or 2, characterized in that the vehicle lays a track and the distance of the vehicle from the wall is varied by varying the distance from the track laid during a preceding circuit.

4. Process according to one of claims 1 to 3, characterized in that a further distance in a further direction (v) relative to the vehicle is monitored as a controlled variable (Y) for drive and/or steering elements of the vehicle.

5. Process according to one or more of claims 1 to 4, characterized in that the vehicle detects when it is travelling again over a portion of the area it has already covered.

6. Process according to claim 5, characterized in that the vehicle detects a path already covered by sensing movements of drive elements (x) and steering elements ($\phi$) and on said basis determines whether a current position ($B_m$) of the vehicle corresponds to a previously assumed position ($B_p$).

7. Process according to claim 5, characterized in that detection is effected by recording a marking (31) at a preset position (r) relative to the vehicle.

8. Process according to one or more of claims 1 to 7, characterized in that completion of a circuit is detected by detecting an area portion which has already been worked.

9. Process according to one or more of claims 1 to 8, characterized in that a path covered by the vehicle is recorded and at least parts thereof are stored (57), from the stored parts of a circuit parts of a circuit to be completed immediately thereafter are calculated and stored (63), and, in the event of parts of the path then covered by the vehicle differing from the calculated parts, the presence of a free-standing obstacle (65) on the area of ground is inferred.

10. Process according to one or more of claims 1 to 9, characterized in that a path covered by the vehicle is acquired (55) and its points of intersection ($P_k$) and/or overlaps are determined and from these the presence of constrictions (59) is inferred.

11. Process according to one or more of claims 1 to 10, characterized in that the distance from preselected parts of the wall is monitored and/or the time sequence, in which the distance from the wall is monitored, is defined.

12. Process according to claim 3, characterized in that the first circuit is completed without reference to a wall and in the process a first circuit track is laid.

13. Automatically controlled cleaning vehicle for effecting the process according to one of claims 1 to 12 on an area of ground, on which work is to be effected and which is at least partially defined by upright walls, having a distance measuring device ($17_l$, $43_r$, $43_l$) operating in one direction of the vehicle, a distance selection device (29, 61), a device (33, 37, 39) for detecting a circuit completed by the vehicle along and at a preset distance from the walls, a regulating device (34, 36) for the movement of the vehicle, wherein at least intermittently, in a control circuit, the output ($A_l$) of the distance measuring device ($17_l$) and the output (W) of the selection device (29, 61) are supplied to a differential unit (25) whose output acts upon the regulating device (3, 7), wherein furthermore the detection device (37, 33) acts upon the selection device (29, 61), characterized in that the distance measuring device ($17_l$, $43_r$, $43_l$), the distance selection device (29, 61), the regulating device (34, 36) and the detection device are operationally connected to one another in such a way that, after detection of the circuit already completed by the vehicle, the distance of the vehicle from the wall is varied by a specific amount by means of the selection device, the vehicle is activated in such a way that it completes on the area of ground to be worked a further circuit in the same direction of rotation as the preceding circuit and at the altered distance from the upright walls, completion of the further circuit is detected by the detection device and so work on the area of ground is carried out along a spiral-like path.

14. Vehicle according to claim 13, characterized in that a track-laying arrangement is provided on the vehicle and the distance measuring device comprises a measuring device ($43_r$, $43_l$) for the distance of the vehicle from a laid track (41).

15. Vehicle according to one or more of claims 13 or 14, characterized in that the distance measuring device comprises distance measuring elements ($17_l$, $17_v$) operating in two directions fixed relative to the vehicle, with one element ($17_l$) being at least intermittently connected to the differential unit (25) and the other element ($17_v$) being operationally connected as a control signal generator to the regulating device (3, 7).

16. Vehicle according to one or more of claims 13 to 15, characterized in that a detector unit (33) for a preset marking at a preset vehicle position (31) is provided on the vehicle, said detector unit (33) supplying a signal (F) when it detects the marking (31).

17. Vehicle according to claim 16, characterized in that the detector unit (33) has a detector window ($33_a$) and supplies a signal (F) when the marking appears at the window ($33_a$).

18. Arrangement according to claim 16, characterized in that vehicle movement length (36) and direction (34) sensors are provided as well as a storage device (39) for storing sensor output signals as a marking.

19. Arrangement according to one or more of claims 13 to 18, characterized in that the detection device (33, 37, 39) acts on the output side (F) upon a control input of the distance selection device (27, 29, 61).

20. Vehicle according to one or more of claims 13 to 19, characterized in that vehicle movement length (x) and direction (34) sensors are provided as well as a computing unit (15, 55), to which the outputs of the sensors are connected and which calculates current positions (P) of the vehicle (1) from the sensor signals, as well as a storage unit (57) for the positions ($\Sigma$ P (t)$_\#$) which is connected to the computing unit (55), with moreover the detection device having a comparison unit for comparing current vehicle positions (P(t)) with position values stored in the storage unit (57) in order to determine whether current vehicle positions correspond to previous vehicle positions.

21. Vehicle according to claim 20, characterized in that a reference path memory (63) is provided which is in two-way communication with the computing unit (55), with the computing unit on the basis of position data in the storage unit (57) and a distance value (W) to be preset in future by the distance selection device calculating a future positional sequence of the vehicle and storing it in the reference path memory (63), and that a comparison unit is provided which compares the current positions of the vehicle (1) with positions stored in the reference path memory (63) in order to detect unpredicted and hence unexpected vehicle path variations.

22. Vehicle according to one or more of claims 13 to 21, characterized in that a control unit is provided, whose output controls intermittent disconnection of the control circuit.

**Revendications**

1. Procédé pour la commande automatique d'un véhicule de nettoyage sur une surface au sol à traiter définie au moins en partie par des parois dressées, selon lequel le véhicule fait un premier tour le long des parois, suivant un écartement prédéfini, étant précisé qu'un écartement par rapport au mur prévu à gauche ou à droite du véhicule est contrôlé et corrigé, au cas il diffère de l'écartement prédéfini, et, une fois que le tour mentionné est terminé, le traitement de la surface au sol est poursuivi automatiquement, caractérisé en ce que, pour la poursuite du traitement le long d'une trajectoire en spirale,

    a) la fin du tour mentionné plus haut est détectée,

    b) l'écartement entre le véhicule et la paroi est modifié d'une valeur définie,

    c) un second tour est alors effectué, suivant l'écartement modifié, dans le même sens de rotation que le précédent,

d) la fin du second tour est détectée, et

les phases b) à d) étant reprises.

2. Procédé selon la revendication 1, selon lequel la surface au sol est divisée en au moins deux surfaces partielles reliées (20a, 20b), caractérisé en ce que le véhicule passe d'une surface partielle à l'autre sur une seconde trajectoire et les surfaces partielles sont traitées comme surfaces au sol selon la revendication 1.

3. Procédé selon l'une au moins des revendications 1 et 2, caractérisé en ce qu'une trace est laissée par le véhicule et l'écartement entre le véhicule et la paroi est variée en faisant varier l'écartement par rapport à la trace laissée lors d'un tour précédent.

4. Procédé selon l'une des revendications 1 à 3, caractérisé en ce qu'un second écartement dans une seconde direction (v) est contrôlé par rapport au véhicule et utilisé, comme grandeur de commande (Y) pour des organes d'entraînement et/ou de direction du véhicule.

5. Procédé selon l'une au moins des revendications 1 à 4, caractérisé en ce qu'on détecte, au niveau du véhicule, si celui-ci passe à nouveau sur une zone de surface déjà parcourue.

6. Procédé selon la revendication 5, caractérisé en ce qu'une trajectoire déjà parcourue est calculée, à partir du véhicule, grâce à la détection de déplacements d'organes d'entraînement (x) et d'organes de direction ($\phi$) et une concordance entre une position momentanée ($B_m$) du véhicule et une position adoptée précédemment ($B_p$) est constatée.

7. Procédé selon la revendication 5, caractérisé en ce que la détection est effectuée grâce à un enregistrement d'un marquage (31) à une position prédéfinie (r) par rapport au véhicule.

8. Procédé selon l'une au moins des revendications 1 à 7, caractérisé en ce que, grâce à la détection d'une zone de surface déjà traitée, la fin d'un tour est détectée.

9. Procédé selon l'une au moins des revendications 1 à 8, caractérisé en ce qu'une trajectoire de véhicule parcourue est enregistrée, au moins des parties de celle-ci sont mises en mémoire (57), à partir de ces parties d'un tour mises en mémoire sont calculées et mises en mémoire (63) des parties d'un tour devant être parcouru immédiatement sur celles-ci, et en cas de différence entre les parties de trajectoire parcourues ensuite par le véhicule et les parties calculées, la présence d'un obstacle isolé (65) sur la surface au sol est déduite.

10. Procédé selon l'une au moins des revendications 1 à 9, caractérisé en ce qu'une trajectoire de véhicule parcourue est détectée (55), ses croisements ($P_K$) et/ou chevauchements sont constatés et la présence de rétrécissements (59) en est déduite.

11. Procédé selon l'une au moins des revendications 1 à 10, caractérisé en ce que l'écartement par rapport à des parties de la paroi choisies préalablement est contrôlé et/ou la succession dans le temps selon laquelle l'écartement par rapport à la paroi est contrôlé, est fixée.

12. Procédé selon la revendication 3, caractérisé en ce que le premier tour est effectué sans se rapporter à une paroi et une première trace de tour est ainsi réalisée.

13. Véhicule de nettoyage à commande automatique pour la mise en oeuvre du procédé selon l'une des revendications 1 à 12 au niveau d'une surface au sol à traiter définie au moins en partie par des parois dressées, comportant un dispositif de mesure d'écartement ($17_l$, $43_r$ - $43_l$) agissant dans une direction du véhicule, un dispositif (29, 61) pour prédéfinir l'écartement, un dispositif (33, 37, 39) pour détecter un tour parcouru par le véhicule le long des parois, suivant un écartement prédéfini, un dispositif de réglage (34, 36) pour le déplacement du véhicule, étant précisé qu'au moins temporairement, la sortie ($A_l$) du dispositif de mesure d'écartement ($17_l$) et la sortie (W) du dispositif (29, 61) sont amenées, dans un circuit régulateur, à une unité différentielle (25) dont la sortie agit sur le dispositif de réglage (3, 7), et que, par ailleurs, le dispositif de détection (37, 33) agit sur le dispositif (29, 61), caractérisé en ce que le dispositif de mesure d'écartement ($17_l$, $43_r$, $43_l$), le dispositif (29, 61) pour prédéfinir l'écartement, le dispositif de réglage (34, 36) et le dispositif de détection sont reliés entre eux de façon fonctionnelle de telle sorte qu'après détection du tour déjà parcouru par le véhicule, l'écartement entre le véhicule et le mur soit modifié à l'aide du dispositif (29, 61) suivant une valeur définie, le véhicule est commandé de telle sorte qu'il fasse un second tour sur la surface au sol à traiter, dans le même sens de rotation que le précédent et suivant l'écartement par rapport aux parois dressées qui a été modifié, la fin du second tour est détectée à l'aide du dispositif de détection et la surface au sol est ainsi traitée suivant une trajectoire en spirale.

14. Véhicule selon la revendication 13, caractérisé en ce qu'il est prévu, au niveau du véhicule, un dispositif traceur et le dispositif de mesure d'écartement comprend un dispositif de mesure $(43_r, 43_l)$ pour l'écartement entre le véhicule et une trace laissée (41).

15. Véhicule selon l'une au moins des revendications 13 ou 14, caractérisé en ce que le dispositif de mesure d'écartement comprend des organes de mesure de distance $(17_l, 17_v)$ agissant dans deux directions fixes par rapport au véhicule, l'un $(17_l)$ étant relié au moins temporairement à l'unité différentielle (25) tandis que l'autre $(17_v)$ est relié de façon fonctionnelle, comme transmetteur de signaux de commande, au dispositif de réglage (3, 7).

16. Véhicule selon l'une au moins des revendications 13 à 15, caractérisé en ce qu'il est prévu, au niveau du véhicule (1), une unité de détection (33) pour un marquage prédéfini au niveau d'une position de véhicule (31) prédéfinie, l'unité de détection (33) délivrant un signal (F) lorsqu'elle détecte le marquage (31).

17. Véhicule selon la revendication 16, caractérisé en ce que l'unité de détection (33) possède une fenêtre de détection $(33_a)$ et délivre un signal (F) lorsque le marquage apparaît au niveau de la fenêtre $(33_a)$.

18. Installation selon la revendication 16, caractérisée en ce qu'il est prévu des capteurs de longueur (36) et de direction (34) de déplacement du véhicule, ainsi qu'un dispositif de mémoire (39) pour la mise en mémoire de signaux de sortie de capteurs comme marquage.

19. Installation selon l'une au moins des revendications 13 à 18, caractérisé en ce que le dispositif (33, 37, 39) de détection agit, côté sortie (F), sur une sortie de commande du dispositif (27, 29, 61) prévu pour prédéfinir l'écartement.

20. Véhicule selon l'une au moins des revendications 13 à 19, caractérisé en ce qu'il est prévu des capteurs de longueur (x) et de direction (34) de déplacement du véhicule, une unité de calcul (15, 55) à laquelle sont reliées les sorties des capteurs et qui calcule des positions momentanées (P) du véhicule (1) à partir des signaux de capteurs, et une unité de mémoire (57) pour les positions $(\Sigma P(t)_{\#})$, reliée à l'unité de calcul (55), et le dispositif de détection possède une unité de comparaison pour la comparaison de positions de véhicule momentanées (P(t)) et de valeurs de position mises en mémoire dans l'unité de mémoire (57), en vue du calcul de la concordance de positions de véhicule momentanées avec des positions de véhicule précédentes.

21. Véhicule selon la revendication 20, caractérisé en ce qu'il est prévu une mémoire de trajectoire de référence (63) qui est reliée suivant une liaison réciproque à l'unité de calcul (55), l'unité de calcul calculant, sur la base de données de position contenues dans l'unité de mémoire (57) et d'une valeur d'écartement (W) devant être prédéfinie à l'avenir par le dispositif pour prédéfinir l'écartement, et mettant dans la mémoire de trajectoire de référence (63) une succession future de positions du véhicule, et en ce qu'il est prévu une unité de comparaison qui compare les positions momentanées du véhicule (1) aux positions mises en mémoire dans la mémoire de trajectoire de référence (63), en vue du calcul d'écarts de trajectoire de véhicule non calculés d'avance et, de ce fait, inattendus.

22. Véhicule selon l'une au moins des revendications 13 à 21, caractérisé en ce qu'il est prévu une unité de commande dont la sortie commande l'interruption temporaire du circuit régulateur.

FIG. 1

$d_a < d_b < d_c .... < d_z$

FIG. 2

15

FIG. 3a

FIG. 3b

FIG.4

FIG.5

FIG.6

zu 25, 55

$W$

61 — | W-Steuerg. |

59 — | Kreuzpkt. Det. |    | Hind. Det. | — 65

$P_K$ $P_O$

63 — | |    | RE |    55    | abgefahrene Bahn $\Sigma P(t)_\#$ | — 57

$\Sigma P(t+T)_\#$

$P(t+T)_\#$

$P(t)_\#$

$\Sigma P(t)_\#$

$W$

$x, \varphi$

53

— 1

FIG. 7

FIG. 8a

FIG. 8b

FIG. 8c

FIG.9